# EUROPEAN PATENT APPLICATION

(11) **EP 4 535 730 A1**
(43) Date of publication of application: **09.04.2025**
(21) Application number: 23829361.7
(22) Date of filing: 16.01.2023
(51) Int. Cl.: H04L 12/00

(54) **FUNCTION MANAGEMENT METHOD OF NETWORK MANAGEMENT SYSTEM, STORAGE MEDIUM, AND RELATED APPARATUS**

(30) Priority: 30.06.2022 CN 202210771724
(71) Applicant: ZTE CORPORATION, Shenzhen, Guangdong 518057 (CN)
(72) Inventor: ZHANG, Dunhua, Shenzhen, Guangdong 518057 (CN)
(74) Representative: Deambrogi, Edgardo
(86) International application number: PCT/CN2023/072386
(87) International publication number: WO 2024/001168

(57) **Abstract**

The present disclosure relates to the field of communications. Provided are a function management method of a network management system, a storage medium and a related apparatus. The function management method of the network management system comprises: after a network management system establishes a communication link with a base station, acquiring a data model packet uploaded by the base station, the data model packet comprising a file required for function management of a network management system, and the data model packet being pre-stored in a software version of the base station; and dynamically loading the data model packet to achieve function management of the network management system.

## Description

### Cross-Reference to Related Application

The present disclosure claims priority to Chinese Patent Application no. CN202210771724.0, filed to the China National Intellectual Property Administration on 30 June 2022 and entitled "Function Management Method of Network Management System, Storage Medium and Related apparatus", which is incorporated herein by reference in its entirety.

### Technical Field

The present disclosure relates to the field of communications, and in particular to a function management method for a network management system, a storage medium and a related device.

### Background

At present, function update and expansion of a network management system are generally implemented by upgrading a network management system version or patching a network management system version. With the mass deployment of 5G sites and the mass application of 5G new features, a network management system is required to quickly expand corresponding functions, so as to perform operation and maintenance management on new features.

The network management system has a method for updating the functions of the network management system by importing a file packet. However, for operators, it still belongs to the category of patching the network management system, and needs to be included in the management of patching the network management system. In addition, since the versions of base stations managed by each network management system are not necessarily the same, this file packet needs to be customized for a specific network management system, and there are technical problems of having a complex operation and being error-prone.

### Summary

The present disclosure provides a function management method for a network management system, a storage medium and a related device, so as to at least solve the problem in the related art of a complex function change or expansion operation of a network management system.

Provided is a function management method for a network management system, comprising: after a network management system establishes a communication link with a base station, acquiring a data model packet uploaded by the base station, the data model packet comprising a file required for function management of a network management system, and the data model packet being pre-stored in a software version of the base station; and dynamically loading the data model packet to achieve function management of the network management system.

The present disclosure provides a function management apparatus of a network management system, comprising a model packet management module and an operation and maintenance management function module. The model packet management module is configured to acquire, after a network management system establishes a communication link with a base station, a data model packet uploaded by the base station, the data model packet comprising a file required for function management of a network management system, and the data model packet being pre-stored in a software version of the base station. The operation and maintenance management function module is configured to dynamically load the data model packet to achieve function management of the network management system.

The present disclosure further provides a storage medium storing a computer program, wherein the computer program execute, when running, the steps in any one of the described method embodiments.

The present disclosure further provides an electronic device, comprising a memory and a processor; the memory stores a computer program, and the processor is configured to run the computer program, so as to execute the operations in any one of the method embodiments.

### Brief Description of the Drawings

The drawings illustrated herein are used for providing further understanding of the present disclosure and constitute a part of the present disclosure, and the exemplary embodiments of the present disclosure and illustrations thereof are used for explaining the present disclosure, rather than constitute inappropriate limitation on the present disclosure. In the drawings:
Fig. 1 is a hardware structure block diagram of a mobile terminal of a function management method for a network management system according to the present disclosure;
Fig. 2 is a flowchart of a function management method for a network management system according to the present disclosure;
Fig. 3 is a flowchart of step 201 according to an exemplary embodiment of the present disclosure;
Fig. 4 is a flowchart of step 202 according to an exemplary embodiment of the present disclosure;
Fig. 5 is a flowchart of step 403 according to an exemplary embodiment of the present disclosure;
Fig. 6 is a flowchart of step 404 according to an exemplary embodiment of the present disclosure;
Fig. 7 is a structural block diagram of a function management apparatus of a network management system according to the present disclosure;
Fig. 8 is a structural block diagram of a function management system according to the present disclosure.

### Detailed Description of the Embodiments

Hereinafter, the present disclosure is described in detail with reference to the accompanying drawings and in conjunction with the embodiments. It should be noted that the embodiments in the present disclosure and features in the embodiments can be combined without conflicts.

It should be noted that the terms "first", "second" etc. in the description, claims, and accompanying drawings of the present disclosure are used to distinguish similar objects, and are not necessarily used to describe a specific sequence or order.

At present, function update and expansion of a network management system are generally implemented by upgrading a network management system version or patching a network management system version. With the mass deployment of 5G sites and the mass application of 5G new features, a network management system is required to quickly expand corresponding functions, so as to perform operation and maintenance management on new features.

However, the upgrading and patching of a network management system is a complex task. On the one hand, the upgrading of the network management system needs to restart the network management system, which is time-consuming and complicated to operate, and has a great impact on on-site operation and maintenance. On the other hand, in order to guarantee the security and normalization of the operation and maintenance of the network management system, the management of the version of the network management system by the operator becomes more and more strict. The upgrading and patching of a network management system need to be approved by the operator, and many restrictions are imposed on the upgrade content and upgrade time of the network management system, for example, the upgrade of any network management system needs to pass an FOA (network access test), and the number of versions for network management system upgrades within a year is limited.

There is also a method for updating the functions of the network management system by importing a file packet. However, for operators, it still belongs to the category of patching the network management system, and needs to be included in the management of patching the network management system. In addition, since the versions of base stations managed by each network management system are not necessarily the same, this file packet needs to be customized for a specific network management system, the operation is complicated, and it is error-prone.

### Embodiment I

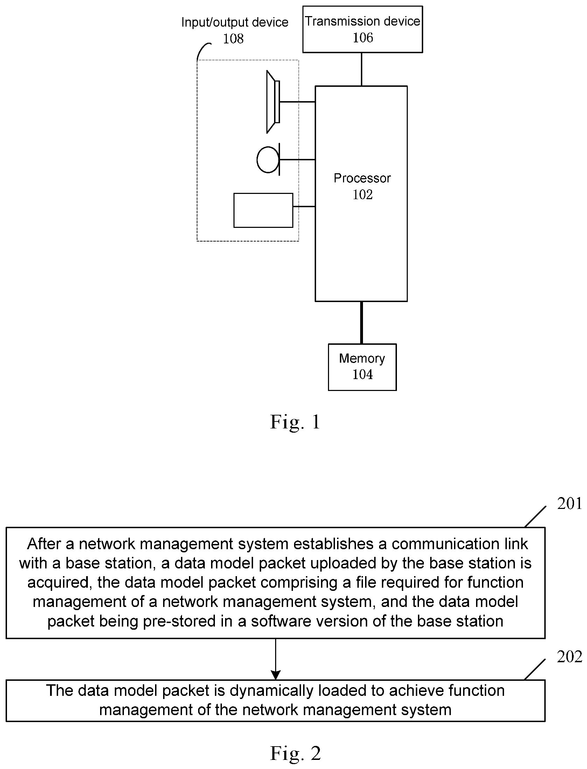

Method embodiments provided in Embodiment I of the present disclosure may be executed in a mobile terminal, a computer terminal, or similar computing apparatuses. Taking the mobile terminal running as an example, Fig. 1 is a hardware structure block diagram of a mobile terminal of a function management method for a network management system according to the present disclosure. As shown in Fig. 1, the mobile terminal 10 may include one or more (only one is shown in Fig. 1) processors 102 (the processors 102 may include, but are not limited to, a microprocessor MCU or a processing device such as a programmable logic device FPGA) and a memory 104 configured to store data, in an exemplary embodiment, the mobile terminal can further include a transmission device 106 for a communication function and an input/output device 108. Those ordinarily skilled in the art can appreciate that the structure shown in Fig. 1 is for illustrative purposes only, but not limit the structure of the mobile terminal. For example, the mobile terminal 10 may also include more or fewer components than that shown in Fig. 1, or have a different configuration than that shown in Fig. 1.

The memory 104 may be configured to store a computer program, for example, a software program and a module of application software, such as the function management method of the network management system corresponding to the information sending method in the embodiment of the present invention. The processor 102 runs the computer program stored in the memory 104, so as to execute various function applications and data processing, that is, to implement the foregoing method. The memory 104 may include a high-speed random access memory, and may also include a non-transitory memory, such as one or more magnetic storage apparatuses, flash memories, or other non-transitory solid-state memories. In some instances, the memory 104 may further include a memory remotely located from the processor 102, and the remote memory may be connected to the mobile terminal 10 by a network. Examples of the network above includes, but is not limited to, an Internet, intranets, a local area network, a mobile communication network, and combinations thereof.

The transmission device 106 is configured to receive or transmit data by a network. Specific examples of the network may include a wireless network provided by a communication provider of the mobile terminal 10. In one example, the transmission device 106 includes a network interface controller (NIC) which may be connected to other network devices by means of a base station, thereby being able to communicate with the Internet. In one example, the transmission device 106 may be a radio frequency (RF for short) module for communicating wirelessly with the Internet.

The present embodiment provides a function management method for a network management system, which is applied to a network management system. Fig. 2 is a flowchart of a function management method for a network management system according to the present disclosure. As shown in Fig. 2, the flow comprises steps 201 to 202 as follows.

At Step 201: after a network management system establishes a communication link with a base station, a data model packet uploaded by the base station is acquired, the data model packet comprising a file required for function management of a network management system, and the data model packet being pre-stored in a software version of the base station.

The network management system (NMS) can manage at least one base station. The function management of the network management system may be function change or expansion of the network management system. The data model packet comprises files required for function management of the network management system, and may comprise programs, scripts, data information files, etc., the data model packet can achieve the function of supporting dynamic loading in the network management system, including some functions of each management domain in the network management system, such as a service template for configuration management, a configuration report, an alarm code for alarm management and the corresponding processing logic, and a performance counter for performance management and the corresponding processing logic.

The data model packet is pre-stored in a software version of a base station, and data model packets stored in base stations of different software versions are different, thus representing differences in management functions on a network management system.

At Step 202: the data model packet is dynamically loaded to achieve function management of the network management system.

As the data model package is pre-stored in the software version of the base station, the base station uploads the data model packet to the network management system after the network management system establishes a communication link with the base station, rather than directly by upgrading or patching the network management system; as the data model packet is pre-stored in the software version of the base station, the change of the data model packet can be realized by upgrading the software version of the base station, and the management of the data model packet in the base station does not need to be approved by the operator, thereby reducing the limitation of the function management of the network management system; furthermore, after acquiring the data model packet uploaded by the base station, the network management system directly and dynamically loads the data model packet, in this way, the function management of the network management system can be implemented, the function management of the network management system can be function change or expansion of the network management system, and the function management of the network management system is implemented conveniently and quickly, solving the problem of a complex function change or expansion operation of a network management system.

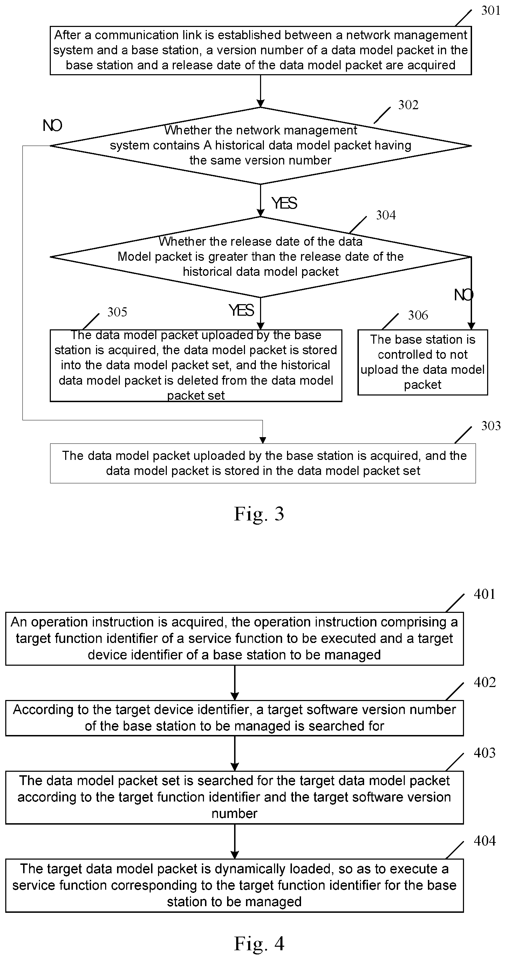

In an exemplary embodiment, as shown in Fig. 3, the method procedure of step 201 includes steps 301 to 306 as follows.

At Step 301: after a communication link is established between a network management system and a base station, a version number of a data model packet in the base station and a release date of the data model packet are acquired.

Each of the data model packets in the base station is provided with an identifier, and the identifier of the data model packet at least comprises a version number of the data model packet and a release date of the data model packet.

The version number of the data model packet is a dedicated version number of the data model packet rather than the software version number of the base station. The new and old version numbers of the data model packets can be compared by using general methods, for example, determining which one is the new version number by means of the size of a number or the lexicographical order of a character string.

The new and old data model packets can also be compared according to the release date of the data model packet.

At Step 302: it is determined whether the network management system contains a historical data model packet having the same version number, if not, step 303 is executed, and if so, step 304 is executed.

At Step 303: the data model packet uploaded by the base station is acquired, and the data model packet is stored in the data model packet set.

The data model packet set is stored in the network management system, and the data model packet set comprises at least one data model packet.

It is determined whether the network management system contains a historical data model packet which has the same version number as the data model packet in the base station; and if not, the data model packet uploaded by the base station is directly acquired, and the data model packet is stored in the data model packet set, which can realize function expansion of the network management system.

At Step 304: it is determined whether the release date of the data model packet is greater than the release date of the historical data model packet, if so, step 305 is executed, and if not, step 306 is executed.

It is determined whether the network management system contains a historical data model packet which has the same version number as the data model packet in the base station; and if so, it is further determined whether the release date of the data model packet in the base station is greater than the release date of the historical data model packet. The release date of the data model packet in the base station being greater than the release date of the historical data model packet refers to that the release date of the data model packet in the base station is more recent than the release date of the historical data model packet, for example, the release date of the data model packet in the base station is 20 May 2022, and the release date of the historical data model packet in the network management system is 10 April 2022, then, the release date of the data model packet in the base station is greater than the release date of the historical data model packet.

At Step 305: the data model packet uploaded by the base station is acquired, the data model packet is stored into the data model packet set, and the historical data model packet is deleted from the data model packet set.

In the case that the release date of the data model packet in the base station is greater than the release date of the historical data model packet, the data model packet uploaded by the base station is acquired, the data model packet is stored into the data model packet set, and the historical data model packet is deleted from the data model packet set, thereby replacing a data model packet with a previous release date with a data model packet with a recent release date, so that the coverage and replacement function of the data model packet is realized, and the function change of the network management system can be realized.

At Step 306: the base station is controlled to not upload the data model packet.

In the case that the release date of the data model packet in the base station is less than or equal to the release date of the historical data model packet, the base station is controlled not to upload the data model packet, so that the deduplication function of the data model packet is realized, that is, the same data model package needs to be retained only once in the network management system.

By means of steps 301 to 306, in the data model packet set stored in the network management system, for one version number, there is only one data model packet of the latest release date, which facilitates management of the data model packet in the network management system.

In an exemplary embodiment, as shown in Fig. 4, the method procedure of step 202 includes steps 401 to 404 as follows.

At Step 401: an operation instruction is acquired, the operation instruction comprising a target function identifier of a service function to be executed and a target device identifier of a base station to be managed.

The operation instruction refers to an operation instruction generated when a user operates the network management system. For example, the operation instruction may be that the user selects to execute the function of configuring and managing a service template on a base station A, or the user selects to execute the function of configuring and managing a service template on the base station A, a base station B, a base station C and a base station D, or the user creates a service data file of the service template and selects to import the service template into the base station A, the base station B, the base station C and the base station D. The service function to be executed may be a function of configuring and managing a service template, may be a function of defining an alarm management alarm code, and may also be function of defining a performance management counter. The service function to be executed may also be other functions according to needs. The target function identifier of the service function to be performed may be the name of the service function to be executed, and may also be the serial number of the service function to be executed, as long as the service function to be executed can be uniquely identified. The target device identifier of the base station to be managed may be the name of the base station to be managed, and may also be the serial number of the base station to be managed, as long as the base station to be managed can be uniquely identified. The number of base stations to be managed may be one, or may be at least two.

At Step 402: according to the target device identifier, a target software version number of the base station to be managed is searched for.

The network management system stores a correlation between a device identifier of a base station and a software version number of the base station, and according to the correlation, a target software version number corresponding to the target equipment identifier can be found.

At Step 403: the data model packet set is searched for the target data model packet according to the target function identifier and the target software version number.

The software version and the service function of the base station which can be managed by different data model packets are different.

At Step 404: the target data model packet is dynamically loaded, so as to execute a service function corresponding to the target function identifier for the base station to be managed.

The network management system supports dynamic loading of the data model packet. At present, many programming languages support dynamic loading programs, such as the java language, the lua script language, and the groovy language. The dynamic loading capabilities can therefore be implemented using these generic techniques. The data information file in the data model packet may be dynamically loaded by reading the newest file each time.

In an exemplary embodiment, the identifier of the data model packet comprises a matching expression, and the matching expression is used for matching a function identifier and a software version number of a base station. For example, the function identifier is a function ID1, the identifier of the data model packet A comprises a matching expression corresponding to the function ID1, and the matching expression corresponding to the function ID1 is the software version number of the base station LN_D_V3.80.20.00, which indicates that the data model packet A can execute a service function corresponding to the function ID1 on the software version number of the base station LN_D_V3.80.20.00. The format of the matching expression is not limited. The matching expression may include one software version number, and may also include at least two software version numbers.

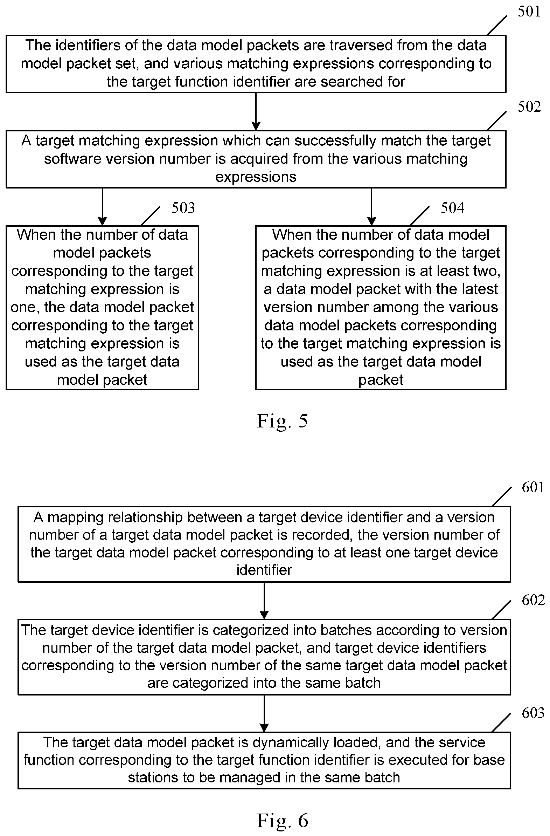

As shown in Fig. 5, the method procedure of step 403 includes steps 501 to 504 as follows.

At Step 501: the identifiers of the data model packets are traversed from the data model packet set, and various matching expressions corresponding to the target function identifier are searched for.

Each data model packet can realize at least one service function, and therefore a data model packet capable of realizing a service function to be executed and the various matching expressions corresponding to the target function identifier are first searched according to the target function identifier.

At Step 502: a target matching expression which can successfully match the target software version number is acquired from the various matching expressions.

The data model packet corresponding to the target matching expression can perform a service function corresponding to the target function identifier for a base station to be managed corresponding to the target software version number.

When the number of base stations to be managed is one, a target matching expression which can successfully match the target software version number is directly acquired. When there are at least two base stations to be managed, for each of the base stations to be managed, target matching expressions capable of successfully matching the target software version number are respectively acquired.

When the number of the base stations to be managed is one, and when no target matching expression capable of successfully matching the target software version number is found, the user is prompted that the network management system cannot perform the service function corresponding to the target function identifier on the base station to be managed. When the number of the base stations to be managed is at least two, and when a target matching expression capable of successfully matching some target software version numbers is not found, the device identifiers of the base stations corresponding to some target software version numbers are recorded, so as to prompt the user that the network management system cannot perform the service function corresponding to the target function identifier on some base stations to be managed.

At Step 503: when the number of data model packets corresponding to the target matching expression is one, the data model packet corresponding to the target matching expression is used as the target data model packet.

At Step 504: when the number of data model packets corresponding to the target matching expression is at least two, a data model packet with the latest version number among the various data model packets corresponding to the target matching expression is used as the target data model packet.

The data model packet with the latest version number among the data model packets corresponding to the target matching expressions is used as the target data model packet, so as to ensure that the target data model packet dynamically loaded is the latest.

In an exemplary embodiment, the matching expression is used for matching a function identifier with at least one software version number; the operation instruction comprises a target device identifier of at least one base station to be managed. The matching expression is used for matching a function identifier and at least one software version number, and can realize that a network management system processes a single service function on a base station of a single software version number; the network management system can also process the same service function for base stations in the same batch with different software version numbers, and in addition, the network management system can process different service functions in batches for base stations in the same batch with different software version numbers.

In an exemplary embodiment, as shown in Fig. 6, the method procedure of step 404 includes steps 601 to 603 as follows.

At Step 601: a mapping relationship between a target device identifier and a version number of a target data model packet is recorded, the version number of the target data model packet corresponding to at least one target device identifier. At Step 602: the target devices are identified, and the target devices are categorized into batches according to the version number of the target data model packets, to make that target device identifiers corresponding to the version number of the same target data model packet are categorized into the same batch. At Step 603: the target data model packet is dynamically loaded, and the service function corresponding to the target function identifier is executed for base stations to be managed in the same batch.

For example, the matching expression of the data model packet A1 is used for matching the function identifier ID1 with the software version V1, the matching expression of the data model packet B1 is used for matching the function identifier ID2 and the software version number V2, and the operation instructions are the user selecting to execute the service function corresponding to the ID1 for a base station a, and the user selecting to execute a service function corresponding to the ID2 for a base station b. Wherein the software version number of the base station a is V1, and the software version number of the base station b is V2; recording a mapping relationship between the version number of the base station a and the data model packet A1; recording a mapping relationship between the version number of the base station b and the data model packet B1; categorizing the base stations into the same batch; categorizing the base stations into the same batch, and sequentially loading the data model packet A1; executing a service function corresponding to the ID1 for the base station a; loading a data model packet B1; and executing a service function corresponding to the ID2 for the base station b.

For another example, the matching expression of the data model packet A1 is used for matching the function identifier ID1 with software version numbers V1, V2 and V3, the matching expression of the data model packet B1 is used for matching the function identifier ID2 and the software version number V4, and the operation instructions are the user selecting to execute the service function corresponding to the ID1 for the base stations a, b and c, and the user selecting to execute the service function corresponding to the ID2 for the base station d. Wherein the software version number of the base station a is V1, and the software version number of the base station b is V2, the software version number of the base station c is V3, and the software version number of the base station d is V4; recording a mapping relationship between the base stations a, b, c and the version number of the data model packet A1; recording a mapping relationship between the base station d and the version number of the data model packet B1; categorizing the base stations a, b and c into the same batch; categorizing the base station d into the same batch; sequentially loading the data model packets A1; and executing a service function corresponding to the ID1 for the base stations a, b and c; loading the data model packet B1; and executing the service function corresponding to the ID2 for the base station d. In this way, the network management system can also process the same service function for base stations in the same batch with different software version numbers, and in addition, the network management system can process different service functions in batches for base stations in the same batch with different software version numbers.

In an exemplary embodiment, the matching expression comprises part of characters in the software version number of the base station and any non-blank characters.

The matching expression does not simply list the software version number of the base station in the description information, as this is not flexible enough, leading to the need to update the description information each time the software version number of a base station is added. In order to solve the problem of flexible description, a regular expression is used for the matching expression, and the matching expression comprises some characters in the software version number of the base station and any non-blank characters. For example, in order to match the software version numbers of two base stations: LN_D_V3.80.20.00 and GULN_D_V5.30.20.00 at the same time, the matching expression may be written as "\S*V3.80.20\S*|\S*V5.30.20\S*"_{∘} \ S* may represent any non-blank character, and V3.80.20 are some characters in LN_D_V3.80.20.00. In this way, the software version numbers of base stations such as GULN_D_V5.30.20.01, GULN_D_V5.30.20.02 and GUL_V5.30.20.02 can all be matched. An excluded matching expression may also be added to the matching expression information, and the program first uses the excluded matching expression to exclude software version numbers of some base stations, and then uses the matching expression for software version numbers of the remaining base stations.

In an exemplary embodiment, the method flow of Step 401 comprises the following steps: extracting, from the service data file, the target function identifier of the service function to be executed and the target device identifier of the base station to be managed.

For example, the service data file inputted by the user may be a service data file of a service template prepared by the user, and the target function identifier of the service function to be executed can be directly extracted from the name of the service data file; the service data file is parsed; and the target device identifier of the base station to be managed is parsed from the specific content of the service data file.

In an exemplary embodiment, it is an important service function in the configuration field of network management systems that a service template configures a service template. This function is closely related to the software version of the base station, and different software versions of the base station may be implemented differently. By means of the method provided in the present disclosure, service templates corresponding to software versions of different base stations can be dynamically supported, without upgrading a network management system. The specific steps are as follows.
(1) The functions of a service template are made into a dynamically loadable program, and the functions of the service template are implemented using the Lua script language. These Lua scripts may be dynamically loaded into a configuration management service of a network management system.
(2) A data model packet is added to running software of the base station, and the program (Lua script) and data information file of the service template are placed in a specified directory of the data model packet. Furthermore, a designated function identifier and a corresponding matching expression are added, the function identifier representing a configuration service template. If the matching expression only matches one software version of the base station, it indicates that the service template program can only operate on the service data of one software version of the base station. If the matching expression can match a plurality software versions of the base station, it indicates that the service template program can operate on the service data of a plurality of software versions of the base station.
(3) After these base stations are linked to the network management system, the data model packets of the base stations are automatically uploaded to the network management system.
(4) The user operates the service template on the network management system, and there are generally two operation modes: service template importing and service template exporting which are both batch operations.

The specific operation of the service template exporting is as follows: a user selects the name of the service template and a batch of base stations, and executes the service template exporting. The name of the service template is the function identifier in the data model packet. With regard to each base station, according to the software version number of the base station, the matching expression of function identifier corresponding to each data model packet in a data model packet set of the network management system is traversed to finally obtain a mapping relationship of each base station corresponding to a unique data model packet, comprising base stations having no matched data model packet, i.e. recording that the base station id corresponds to an empty data model packet. The base stations categorized into batches according to the version numbers of the data model packets. Each batch of base stations are sequentially processed, a service template function in a corresponding data model packet is dynamically loaded first, and then template service exporting processing is performed. For base stations having no corresponding data model packet, a user is prompted that the network management cannot process a template exporting function of the base station. The process ends.

The specific operation of the service template importing is as follows: the user creates a data file of the service template and executes the service template importing. The network management system acquires the corresponding function identifier from the service template data file. The network management system parses all base station ids in the service template data file, and acquires a software version number corresponding to each base station. With regard to each base station, according to the software version number of the base station, the matching expression of function identifier corresponding to each model packet in a data model packet set of the network management system is traversed to finally obtain a mapping relationship of each base station corresponding to a unique data model packet, comprising base stations having no matched data model packet, i.e. recording empty data model packets corresponding to the base station id. The base stations categorized into batches according to the version numbers of the data model packets. Each batch of base stations are sequentially processed, a service template function in a corresponding data model packet is dynamically loaded first, and then template service importing processing is performed. For base stations having no corresponding data model packet, a user is prompted that a network manager cannot process a template importing function of the base station. The process ends.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the embodiments of the present disclosure, or in other words, the part of the technical solutions making contributions to the prior art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

### Embodiment II

The present embodiment further provides a function management apparatus for a network management system, which is configured in the network management system. The apparatus is used for implementing the embodiments and preferred embodiments above, and what has been described will not be described repeatedly here. As used below, the term "module" may implement a combination of software and/or hardware of predetermined functions. Although the apparatus described in the following embodiments is preferably implemented in software, implementation in hardware or a combination of software and hardware is also possible and conceived.

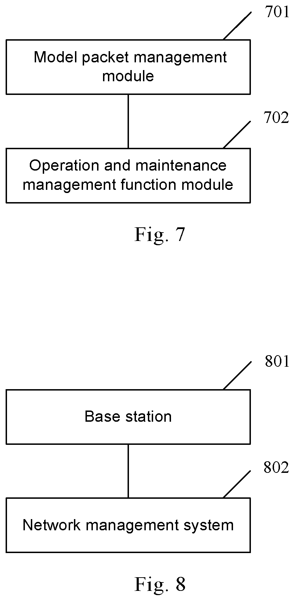

Fig. 7 is a structural block diagram of a function management apparatus of a network management system according to the present disclosure. As shown in Fig. 7, the apparatus includes a model packet management module 701 and an operation and maintenance management function module 702.

The model packet management module 701 is configured to acquire, after a network management system establishes a communication link with a base station, a data model packet uploaded by the base station, the data model packet comprising a file required for function management of a network management system, and the data model packet being pre-stored in a software version of the base station.

The operation and maintenance management function module 702 is configured to dynamically load the data model packet to achieve function management of the network management system.

The model packet management module 701 may also support management capabilities such as deduplication, coverage and replacement, and compatibility with a co-management policy. The model packet management module 701 comprises a data model packet set, the data model packet set comprising at least one data model packet.

The operation and maintenance management function module 702 may also be referred to as a network management function set, such as a performance management module, a configuration management module, and an alarm management module. These modules have the capability to change and expand the functions of the network management system by dynamically loading the data model packets.

It should be noted that the modules above may be implemented by software or hardware, and the latter may be implemented in the following manner, but is not limited thereto: the modules are located in the same processor; or the modules are located in different processors in an arbitrary combination.

### Embodiment III

The present embodiment also provides a function management system. Fig. 8 is a structural block diagram of a function management system according to the present disclosure. As shown in Fig. 8, the function management system comprises a base station 801 and a network management system 802.

The base station 801 used for uploading a data model packet to a network management system after a communication link is established between the network management system and the base station, the data model packet comprising a file required for function management of a network management system, and the data model packet being pre-stored in a software version of the base station.

The network management system 802 is used for acquiring, after a communication link is established between the network management system and the base station, a data model packet uploaded by a base station, and dynamically loading the data model packet, so as to realize function management of the network management system.

The data model packet is pre-stored in a software version of a base station, and data model packets stored in base stations of different software versions are different, thus representing differences in management functions on a network management system.

### Embodiment IV

Embodiments of the present disclosure further provide a storage medium, the storage medium stores a computer program, wherein the computer program is configured to execute, when running, the operations in any one of the described method embodiments.

In an exemplary embodiment, in the present embodiment, the storage medium may include, but is not limited to, any medium that can store a computer program, such as a USB flash drive, a Read-Only Memory (ROM), a Random Access Memory (RAM), a removable hard disk, a magnetic disk, or an optical disc.

### Embodiment V

The embodiments of the present disclosure further provide an electronic apparatus, including a memory and a processor; the memory stores a computer program, and the processor is configured to run the computer program, so as to execute the operations in any one of the method embodiments. The memory 104 in Fig. 1 is taken as an example of a memory in the electronic device.

In an exemplary embodiment, the electronic device can further comprise a transmission device and an input/output device, wherein the transmission device is connected to the processor, and the input/output device is connected to the processor.

In an exemplary embodiment, in the present embodiment, the processor may be configured to execute the steps in any one of the method embodiments by means of a computer program.

In an exemplary embodiment, for specific examples in the present embodiment, reference can be made to the examples described in the described embodiments and optional embodiments, and thus they will not be repeated again in the present embodiment.

According to the present disclosure, after a network management system establishes a communication link with a base station, a data model packet uploaded by the base station is acquired, the data model packet comprising a file required for function management of a network management system, and the data model packet being pre-stored in a software version of the base station; and the data model packet to achieve function management of the network management system is dynamically loaded, so as to realize function management of the network management system. As the data model package is pre-stored in the software version of the base station, the base station uploads the data model packet to the network management system after the network management system establishes a communication link with the base station, rather than directly by upgrading or patching the network management system; as the data model packet is pre-stored in the software version of the base station, the change of the data model packet can be realized by upgrading the software version of the base station, and the management of the data model packet in the base station does not need to be approved by the operator, thereby reducing the limitation of the function management of the network management system; furthermore, after acquiring the data model packet uploaded by the base station, the network management system directly and dynamically loads the data model packet, in this way, the function management of the network management system can be implemented, the function management of the network management system can be function change or expansion of the network management system, and the function management of the network management system is implemented conveniently and quickly, solving the problem of a complex function change or expansion operation of a network management system.

Obviously, those skilled in the art should understand that the modules or steps in some embodiments of the present disclosure can be implemented by using a general computing device, and they can be integrated in a single computing device, and can also be distributed over a network consisting of a plurality of computing devices. In an exemplary embodiment, they may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the present disclosure is not limited to any specific hardware and software combinations.

The content above only relates to preferred embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the scope of protection of the present disclosure.

## Claims

1. A function management method for a network management system, comprising:
after a network management system establishes a communication link with a base station, acquiring a data model packet uploaded by the base station, the data model packet comprises a file required for function management of a network management system, and the data model packet is pre-stored in a software version of the base station; and
dynamically loading the data model packet to implement function management of the network management system.

2. The function management method for the network management system according to claim 1, wherein acquiring the data model packet uploaded by the base station comprises:
acquiring, in the base station, a version number of the data model packet and a release date of the data model packet;
determining whether the network management system contains a historical data model packet having the same version number;
In response to the network management system does not contain the historical data model packet having the same version number, acquiring the data model packet uploaded by the base station and storing the data model packet into a data model packet set; and
In response to the network management system contains the historical data model packet having the same version number, when the release date of the data model packet is greater than the release date of the historical data model packet, acquiring the data model packet uploaded by the base station, storing the data model packet into the data model packet set, and deleting the historical data model packet from the data model packet set.

3. The function management method for the network management system according to claim 2, wherein dynamically loading the data model packet comprises:
acquiring an operation instruction, the operation instruction comprising a target function identifier of a service function to be executed and a target device identifier of a base station to be managed;
searching for a target software version number of the base station to be managed according to the target device identifier;
searching the data model packet set for the target data model packet according to the target function identifier and the target software version number; and
dynamically loading the target data model packet, so as to execute a service function corresponding to the target function identifier for the base station to be managed.

4. The function management method for the network management system according to claim 3, wherein the identifier of the data model packet comprises a matching expression, and the matching expression is used for matching a function identifier and a software version number of a base station;
searching the data model packet set for the target data model packet according to the target function identifier and the target software version number comprises:
traversing the identifiers of the data model packets from the data model packet set, and searching for various matching expressions corresponding to the target function identifier;
acquiring, from the various matching expressions, a target matching expression which can successfully match the target software version number;
when the number of data model packets corresponding to the target matching expression is one, using the data model packet corresponding to the target matching expression as the target data model packet; and
when the number of data model packets corresponding to the target matching expression is at least two, using a data model packet with the latest version number among the various data model packets corresponding to the target matching expression as the target data model packet.

5. The function management method for the network management system according to claim 4, wherein the matching expression is used for matching a function identifier and at least one software version number;
the operation instruction comprises a target device identifier of at least one base station to be managed;
dynamically loading the target data model packet comprises:
recording a mapping relationship between a target device identifier and a version number of a target data model packet, the version number of the target data model packet corresponding to at least one target device identifier;
categorizing the target device identifiers into batches according to version number of the target data model packet, so as to the target device identifiers corresponding to the version number of the same target data model packet are categorized into the same batch; and
dynamically loading the target data model packet, and executing a service function corresponding to the target function identifier for base stations to be managed in the same batch.

6. The function management method for the network management system according to claim 5, wherein the matching expression comprises some characters in the software version number of the base station and any non-blank characters.

7. The function management method for the network management system according to any one of claims 3 to 6, wherein acquiring the operation instruction comprises:
acquiring a service data file inputted by a user; and
extracting, from the service data file, the target function identifier of the service function to be executed and the target device identifier of the base station to be managed.

8. A function management apparatus of a network management system, comprising:
a model packet management module, configured to acquire, after a network management system establishes a communication link with a base station, a data model packet uploaded by the base station, the data model packet comprising a file required for function management of a network management system, and the data model packet being pre-stored in a software version of the base station; and
an operation and maintenance management function module, configured to dynamically load the data model packet to achieve function management of the network management system.

9. A storage medium storing a computer program, wherein the computer program is configured to implement, when executed by a processor, the function management method for the network management system according to any one of claims 1 to 7.

10. An electronic device, comprising a memory and a processor, wherein the memory stores a computer program, and the processor is configured to execute the computer program to implement the function management method for the network management system according to any one of claims 1 to 7.
